# EUROPEAN PATENT SPECIFICATION

(11) **EP 1 758 960 B1**
(45) Date of publication and mention of the grant of the patent: **19.11.2008**
(21) Application number: 05750322.9
(22) Date of filing: 13.06.2005
(51) Int. Cl.: C09D 11/00, C09B 45/00

(54) **METAL COMPLEX DIAZO-COMPOUND AND INKS CONTAINING THEM**
METALLKOMPLEXDIAZOVERBINDUNG UND SIE ENTHALTENDE TINTEN
COMPOSE DIAZOIQUE METALLIQUE COMPLEXE ET ENCRES LE CONTENANT

(30) Priority: 17.06.2004 GB 0413557
(43) Date of publication of application: 07.03.2007
(73) Proprietor: FUJIFILM Imaging Colorants Limited, Blackley, Manchester M9 8ZS (GB)
(72) Inventor: DEVONALD, David Phillip, Blackley, Manchester M9 8ZS (GB); GREENWOOD, David, Oldham, Lancashire OL2 7NB (GB)
(74) Representative: Morpeth, Fraser Forrest
(86) International application number: PCT/GB2005/002301
(87) International publication number: WO 2005/123854

(56) References cited:
- GB-A- 1 430 811
- US-A- 4 215 042
- US-A- 4 594 410
- US-B1- 6 712 893
- PATENT ABSTRACTS OF JAPAN vol. 016, no. 496 (C-0995), 14 October 1992 (1992-10-14) -& JP 04 183754 A (NIHON KAGAKU KOUGIYOUSHIYO:KK), 30 June 1992 (1992-06-30)

## Description

This invention relates to compounds, to processes for their preparation, to compositions derived therefrom (e.g. inks) and to their use in ink jet printing ("IJP"). IJP is a non-impact printing technique in which droplets of ink are ejected through a fine nozzle onto a substrate without bringing the nozzle into contact with the substrate.

There are many demanding performance requirements for dyes and inks used in IJP. For example, it is desirable that they provide sharp, non-feathered images having good water-fastness, light-fastness and optical density. The inks are often required to dry quickly when applied to a substrate to prevent smudging, but they should not form a crust over the tip of ink jet nozzles because this will stop the printer from working. The inks should also be stable to storage over time without decomposing or forming a precipitate which could block the fine nozzles.

JP04-183754 describes certain metallised cationic dyes for use in conventional dyeing processes.

Surprisingly it has been found that compounds and inks of the present invention have exceptional properties when used in ink jet printing, producing prints of a neutral black shade with excellent light- and ozone-fastness and high operability.

According to the present invention there is provided an ink comprising a liquid medium and a compound of Formula (1): 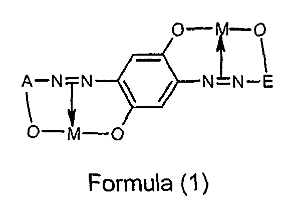 wherein:
- A and E: are each independently optionally substituted phenylene or naphthylene groups;
- each M: independently is a metal selected from Fe, Co, Cr, Cu, Ni, Zn, Al or Ti; and
wherein the liquid medium comprises water and an organic solvent.

Preferably one of A and E is optionally substituted phenylene and the other is optionally substituted naphthylene.

Preferably the oxygen (O) and azo (-N=N-) groups shown attached to A or E in Formula (1) are attached to ortho carbon atoms in A or E. Thus preferred compounds of Formula (1) are of Formula (1A), (1 B) or (1 C): 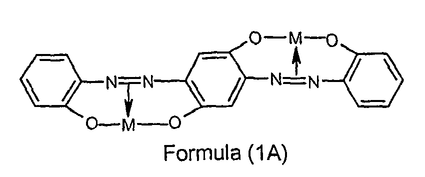 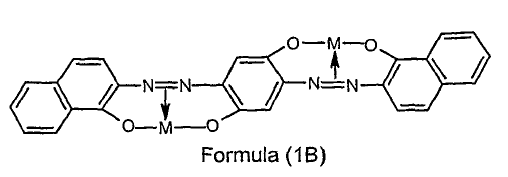 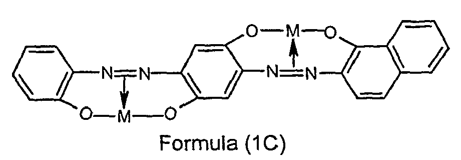 wherein M is as hereinbefore defined and the phenylene and naphthylene groups shown on either side of the tetra substituted central phenylene group are optionally substituted. Compounds of formula (1 C) are more preferred.

Preferably the compound of Formula (1) has at least two water solubilising groups. Preferably, said water solubilising groups are present on A and/or E. More preferably, at least one water solubilising group is present on each of A and E.

The water solubilising groups may be any groups able to increase the aqueous solubility of the compound of Formula (1). Thus, for example, it may be an ionisable anionic or cationic group or a non-ionic group.

Preferably, the water solubilising groups comprise an anionic ionisable group, more preferably the water solubilising groups comprises a group selected from the group consisting of carboxy, sulpho and phosphato.

Preferably at least two, more preferably all, of the water solubilising groups are selected from carboxy, sulpho and phosphato. Further preferably the water solubilising groups include a sulpho group. Especially preferably the compound of Formula (1) has at least two sulpho groups, more preferably two or three sulpho groups.

Preferably the compound of Formula (1) has a solubility in water at 25°C of at least 1% and more preferably the compound of Formula (1) has a solubility in water at 25°C of at least 2.5%. It is particularly preferred that the compound of Formula (1) has a solubility in water at 25°C of at least 5%.

It is preferred that the ink composition according to the invention is ink suitable for use in an ink-jet printer. Ink suitable for use in an ink-jet printer is ink which is able to repeatedly fire through an ink-jet printing head without causing blockage of the fine nozzles.

Preferred optional substituents are each independently selected from halo, hydroxy, sulpho, sulphonyl, cyano, carbonamido, phosphato, carboxy, nitro, amino, optionally substituted alkyl (especially C₁₋₄-alkyl optionally carrying a sulpho, carboxy, phosphato, C₁₋₄-alkoxy, amino or hydroxy group), optionally substituted aryloxy or alkoxy (especially aryloxy or C₁₋₄-alkoxy optionally carrying a sulpho, carboxy, phosphato, C₁₋₄-alkoxy, C₁₋₄-alkyl, amino or hydroxy group), optionally substituted aryl (especially phenyl or phenyl carrying from 1 to 3 substituents selected from sulpho, carboxy, phosphato, C₁₋₄-alkoxy, amino, hydroxy and N carrying one or two C₁₋₄-alkyl groups optionally carrying a sulpho, carboxy, phosphato, C₁₋₄-alkoxy, amino or hydroxy group), optionally substituted amine (especially N carrying one or two aryl or C₁₋₄-alkyl groups optionally carrying a sulpho, carboxy, phosphato, C₁₋₄-alkoxy, amino or hydroxy group), optionally substituted acylamine (especially C₁₋₄-acylamino), optionally substituted ester (especially C₁₋₄-ester), optionally substituted alkenyl (especially C₁₋₄ alkenyl optionally carrying a sulpho, carboxy, phosphato, C₁₋₄-alkoxy, C₁₋₄-alkyl, amino or hydroxy group), optionally substituted alkynyl (especially C₁₋₄ alkynyl optionally carrying a sulpho, carboxy, phosphato, C₁₋₄-alkoxy, C₁₋₄-alkyl, amino or hydroxy group) and optionally substituted heterocyclyl (especially optionally substituted heteroaryl). Optional substituents for any of the foregoing substituents may themselves be selected from the same list of substituents. The substituents in the foregoing list which possess water solubilising properties may constitute the above mentioned water solubilising groups.

The more preferred optional substituents are each independently selected from halo, hydroxy, sulpho, sulphonyl, cyano, carbonamido, phosphato, carboxy, nitro, amino, optionally substituted alkyl (especially C₁₋₄-alkyl optionally carrying a sulpho, carboxy, phosphato, C₁₋₄-alkoxy, amino or hydroxy group), optionally substituted aryloxy or alkoxy (especially aryloxy or C₁₋₄-alkoxy optionally carrying a sulpho, carboxy, phosphato, C₁₋₄-alkoxy, C₁₋₄-alkyl, amino or hydroxy group), optionally substituted aryl (especially phenyl or phenyl carrying from 1 to 3 substituents selected from sulpho, carboxy, phosphato, C₁₋₄-alkoxy, amino, hydroxy and N carrying one or two C₁₋₄-alkyl groups optionally carrying a sulpho, carboxy, phosphato, C₁₋₄-alkoxy, amino or hydroxy group), optionally substituted amine (especially N carrying one or two aryl or C₁₋₄-alkyl groups optionally carrying a sulpho, carboxy, phosphato, C₁₋₄-alkoxy, amino or hydroxy group), and optionally substituted acylamine (especially C₁₋₄-acylamino). More preferably still each optional substituent is independently selected from the group consisting of sulpho, nitro, phosphato and carboxy, yet still more preferably from sulpho and nitro.

In this specification, the terms phosphato, carboxy and sulpho groups include both the free acid or salt forms thereof and the term amines includes both the neutral or salt form thereof.

Preferably the optional substituents are not of Formula (2): 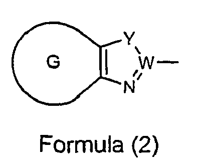 wherein:
- G: is an aryl or heteroaryl aromatic ring; and
- W, Y: are each independently selected from carbon, sulphur, oxygen or nitrogen.
Preferably the optional substituents are not fibre reactive groups, e.g. capable forming a covalent bond with functional groups present on fibres or textiles (e.g. the hydroxy groups of cellulose or the amino groups of polyamides).

Preferably, the or each optional substituent on A, which preferably is optionally substituted phenylene, independently is selected from sulpho, nitro and a sulphonyl group (e.g. an alkylsulphonyl group).

In a preferred aspect of the present invention A is 4-sulpho-1,2-phenylene, 4-nitro-1,2-phenylene, 5-nitro-1,2-phenylene, 4-ethylsulphonyl-1,2-phenylene or 4-ethyl-1,2-phenylene.

Preferably each optional substituent on E, which preferably is optionally substituted naphthylene, independently is selected from the group consisting of hydroxy, optionally substituted amine or acylamine, sulpho, nitro, carboxy, phosphato; more preferably from optionally substituted amine or acylamine, sulpho and nitro. In a particularly preferred embodiment at least one, more preferably two, of the optional substituents on E is sulpho.

In a preferred aspect of the present invention, E is 3,6-disulphonaphth-1,2-ylene, 3,6-disulphonaphth-2,1-ylene, 6-amino-3,5-disulphonaphth-1,2-ylene, 3-sulpho-7-phenylaminonaphth-1,2-ylene, 3-sulpho-7-acetylaminonaphth-1,2-ylene, 3-sulpho-7-(2-sulphoethyl)aminonaphth-1,2-ylene, 8-dihydroxy-3,6-disulphonaphth-1,2-ylene, 3,6-disulpho-7-aminonaphth-1,2-ylene, or 8-acetylamino-3,6-disulphonaphth-1,2-ylene.

Preferably each M independently is copper, nickel, cobalt, chromium, zinc or iron; more preferably copper, nickel, cobalt or chromium; especially copper or cobalt; particularly especially M is copper. Preferably both groups represented by M are the same metal, most preferably both are copper.

In a further particularly preferred embodiment of the present invention the compound of Formula (1) is a compound of Formula (3) or a salt thereof wherein X is sulpho or nitro and M is copper: 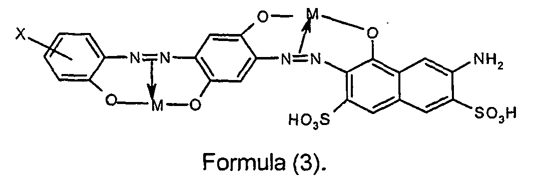 In one especially preferred embodiment the compound of Formula (1) is of Formula (4) or a salt thereof wherein M is copper:

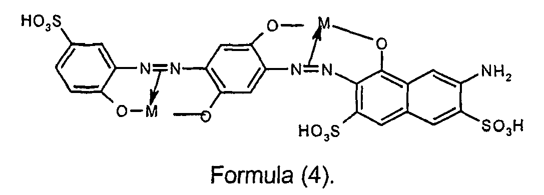

In another especially preferred embodiment the compound of Formula (1) is of Formula (5) or a salt thereof wherein M is copper:

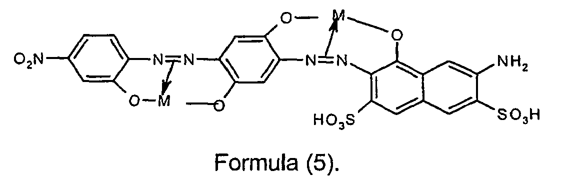

In one embodiment of the present invention the compound of Formula (1) is not of the formula shown in Formula (4). In a further embodiment of the present invention the compound of Formula (1) is not of the formula shown in Formula (5).

In this specification the formulae cover all tautomers thereof.

When the compound of Formula (1) is in the form of a salt preferred salts are alkali metal salts, especially lithium, sodium and potassium salts, ammonium and substituted ammonium salts and mixtures thereof. Especially preferred salts are salts with ammonia and volatile amines. The free acid form may be converted into a salt using known techniques. For example, an alkali metal salt may be converted into a salt with ammonia or an amine by dissolving an alkali metal salt of the composition in water, acidifying with a mineral acid and adjusting the pH of the solution to pH 9 to 9.5 with ammonia or the amine and removing the alkali metal cations by dialysis.

Preferably the compound of Formula (1) is black, more preferably a black dye.

The weight ratio of water to organic solvent is preferably from 99:1 to 1:99, more preferably from 99:1 to 50:50 and especially from 95:5 to 80:20.

It is preferred that the organic solvent present in the mixture of water and organic solvent is a water-miscible organic solvent or a mixture of such solvents. Preferred water-miscible organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane. Preferably the liquid medium comprises water and 2 or more, especially from 2 to 8, water-soluble organic solvents.

Especially preferred water-soluble organic solvents are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially ((2-methoxy-2)-ethoxy)-2-ethoxyethanol.

Optionally the liquid medium comprises an oxidant.

The ink preferably comprises:
(a) from 0.01 to 30 parts of a compound of Formula (1) or salt thereof as defined in relation to the first aspect of the present invention; and
(b) from 70 to 99.99 parts of a liquid medium comprising water and an organic solvent;
wherein all parts are by weight and the number of parts of (a)+(b)=100.

The number of parts of component (a) is preferably from 0.1 to 20, more preferably from 0.5 to 15, and especially from 1 to 5 parts. The number of parts of component (b) is preferably from 99.9 to 80, more preferably from 99.5 to 85, especially from 99 to 95 parts.

Preferably component (a) is completely dissolved in component (b). Preferably component (a) has a solubility in component (b) at 20°C of at least 10%. This allows the preparation of liquid dye concentrates which may be used to prepare inks and reduces the chance of the dye precipitating if evaporation of the liquid medium occurs during storage.

Typically the liquid medium will further comprise one or more surfactants, for example anionic and/or nonionic surfactants. Examples of anionic surfactants include: sulphonate surfactants such as sulphosuccinates (Aerosol^{™} OT, A196; AY and GP, available from CYTEC) and sulphonates (Aerosol^{™} DPOS-45, OS available from CYTEC; Witconate^{™} C-50H available from WITCO; Dowfax^{™} 8390 available from DOW); and fluoro surfactants (Fluorad^{™} FC99C available from 3M). Examples of nonionic surfactants include: fluoro surfactants (Fluorad^{™} FC170C available from 3M); alkoxylate surfactants (Tergitol^{™} series 15S-5, 15S-7, and 15S-9 available from Union Carbide); and organosilicone surfactants (Silwet^{™} L-77 and L-76-9 available from WITCO).

One or more buffers may optionally be included in the liquid medium to modulate pH of the ink. The buffers can be organic-based biological buffers or inorganic buffers, preferably, organic-based. Examples of preferred buffers include tris(hydroxymethyl)aminomethane (TRIS), available from companies such as Aldrich Chemical (Milwaukee, Wis.), 4-morpholine ethanesulphonic acid (MES), 4-morpholinepropanesulphonic acid (MOPS), and beta-hydroxy-4-morpholinepropanesulphonic acid (MOPSO). Further, the buffers employed preferably provide a pH ranging from 3 to 10 in the practice of the invention.

One or more of the biocides commonly employed in ink jet inks may optionally be used in the ink, such as Nuosept^{™} 95, available from Huls America (Piscataway, N.J.); Proxel^{™} GXL, available from Arch Chemicals, Inc. (Norwalk, Connecticut), ; and glutaraldehyde, available from Union Carbide Company (Bound Brook, N.J.) under the trade designation Ucarcide 250.

Inks according to the invention may optionally also include one or more metal chelators. Such chelators are used to bind any free transition metal cations that may be present in the ink. Examples of preferred metal chelators include: ethylenediaminetetraacetic acid ("EDTA"), diethylenediaminepentaacetic acid ("DPTA"), trans-1,2-diaminocyclohexanetetraacetic acid ("CDTA"), ethylenedinitrilotetraacetic acid ("EGTA"). Other chelators may be employed additionally or alternatively.

In one embodiment inks according to the invention have a pH of from about 3 to about 5, preferably from about 3.5 to about 4.5. In another embodiment the pH of the composition is preferably from 4 to 11, more preferably from 7 to 10. Optionally the composition comprises a buffer.

The viscosity of the ink at 25°C is preferably less than 50cP, more preferably less than 20 cP and especially less than 5cP.

According to a second aspect of the present invention there is provided a compound of Formula (1) as defined, in claim 6.

Preferred compounds of Formula (1) are of Formula (1A), (1B) or (1C) described above, with the proviso that the phenylene and napththylene groups shown on either side of the tetra substituted central phenylene group are free from quaternary ammonium groups.

According to a third aspect of the present invention there is provided a process for printing an image on a substrate comprising applying thereto an ink according to the first aspect of the present invention.

Preferably the ink is applied to the substrate by means of an ink jet printer. The ink jet printer preferably applies the ink to the substrate in the form of droplets which are ejected through a small orifice onto the substrate. Preferred ink jet printers are piezoelectric ink jet printers and thermal ink jet printers. In thermal ink jet printers, programmed pulses of heat are applied to the ink in a reservoir by means of a resistor adjacent to the orifice, thereby causing the ink to be ejected in the form of small droplets directed towards the substrate during relative movement between the substrate and the orifice. In piezoelectric ink jet printers the oscillation of a small crystal causes ejection of the ink from the orifice.

The image is preferably text, a picture, a photorealistic image or a combination thereof.

The substrate is preferably paper, plastic, a textile, metal or glass, more preferably a treated substrate such as a coated paper or coated plastic, especially plain paper. One of the advantages of the present process is its ability to provide very good printing results even on plain paper.

Preferred papers have an acid, alkaline or neutral character. Examples of commercially available papers include HP Premium Coated Paper^{™}, HP Photopaper^{™}, HP Printing paper^{™} (available from Hewlett Packard Inc.); Stylus Pro 720 dpi Coated Paper^{™} , Epson Photo Quality Glossy Film^{™} , Epson Photo Quality Glossy Paper^{™} (all available from Seiko Epson Corp.); Canon HR 101 High Resolution Paper^{™}, Canon GP 201 Glossy Paper^{™}, Canon HG 101 and HG201 High Gloss Film^{™}, Canon PR101^{™} (all available from Canon); Kodak Premium Photopaper, Kodak Premium InkJetpaper^{™} (available from Kodak); Konica Inkjet Paper QP^{™} Professional Photo Glossy, Konica Inkjet Paper QP^{™} Professional Photo 2-sided Glossy, Konica Inkjet Paper QP^{™} Premium Photo Glossy, Konica Inkjet Paper QP^{™} Premium Photo Silky^{™} (available from Konica) and Xerox Acid Paper (this is a plain paper) (available from Xerox).

Ink suitable for use in an ink-jet printer preferably contains less than 500ppm, more preferably less than 250ppm, especially less than 100ppm, more especially less than 10ppm in total of divalent and trivalent metal ions (other than any divalent and trivalent metal ions bound to a compound of Formula (1) or any other component of the ink).

Preferably, ink suitable for use in an ink-jet printer has been filtered through a filter having a mean pore size below 10µm, more preferably below 3µm, especially below 2µm, more especially below 1µm. This filtration removes particulate matter that could otherwise block the fine nozzles found in many ink-jet printers.

When the ink according to the invention are used in ink jet printing, the ink preferably has a concentration of less than 500 parts per million, more preferably less than 100 parts per million of halide ions.

The compounds of the invention may be used as the sole colorant in the ink according to the first aspect of the invention because of their attractive black shade. However, if desired, one may combine the present compounds together and/or with one or more further colorants to reduce nozzle blockage (by improving their solubility) or if a slightly different shade is required for a particular end use. Thus inks according to the first aspect of the invention are obtained which comprise at least one further colorant. The further colorants are preferably dyes. When further colorants are included in the composition these are preferably selected from black, magenta, cyan and yellow colorants and combinations thereof.

Suitable further black colorants include C.I.Food Black 2, C.I.Direct Black 19, C.I.Reactive Black 31, PRO-JET^{™} Fast Black 2, C.I.Direct Black 195; C.I.Direct Black 168; other black colorants made or sold by original equipment manufacturers (OEMs) including Lexmark, Seiko Epson, Canon and Hewlett-Packard and other black colorants described in patents and patent applications by OEMs including the aforesaid Lexmark (e.g. EP 0 539,178 A2, Example 1, 2, 3, 4 and 5), Orient Chemicals (e.g. EP 0 347 803 A2, pages 5-6, azo dyes 3, 4, 5, 6, 7, 8, 12, 13, 14, 15 and 16), Canon, Hewlett-Packard and Seiko Epson Corporation.

Suitable further magenta colorants include PRO-JET^{™} Fast Magenta 2 and other magenta colorants made by, sold by or described in patents and patent applications by OEMs including Lexmark, Seiko Epson, Canon and Hewlett-Packard.

Suitable further yellow colorants include C.I.Direct Yellow 142; C.I.Direct Yellow 132; C.LDirect Yellow 86; PRO-JET™ Yellow OAM; PRO-JET™ Fast Yellow 2; C.I.Direct Yellow 85; C.I. Direct Yellow 173; and C.I.Acid Yellow 23 and other yellow colorants made by, sold by or described in patents and patent applications by OEMs including Lexmark, Seiko Epson, Canon and Hewlett-Packard.

Suitable further cyan colorants include phthalocyanine colorants, C.I. Direct Blue 199 and C.I. Acid Blue 9 and other cyan colorants made by, sold by or described in patents and patent applications by OEMs including Lexmark, Seiko Epson, Canon and Hewlett-Packard.

In a fourth aspect of the invention there is provided a process for the preparation of a compound of Formula (1) as defined in claim 6 which comprises reacting a compound of Formula (6), wherein each R is independently H or methyl, and A and E are as hereinbefore defined, with a salt of a metal M (wherein M is as defined above) to effect complexation, and simultaneous demethylation in the case where R is methyl: 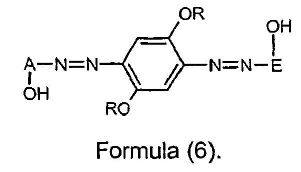 The compound of Formula (6) may be made by diazotising an amine of Formula (7) and coupling the resultant diazonium salt with a compound of formula H-E-OH:

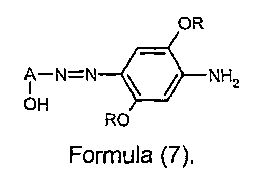

The compound of Formula (7) may be prepared by diazotising a compound of formula HO-A-NH₂ and coupling the resultant diazonium salt onto a compound of Formula (8):

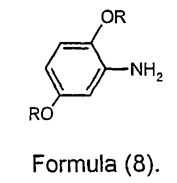

Preferably the diazotisations are carried out using a diazotising agent, especially sodium nitrite under acidic conditions. Further preferably the diazotisations are carried out at a temperature of 0 to 5°C. In all the above processes A, E and R are as hereinbefore defined.

In an alternative aspect of the invention, there is provided a process for the preparation of a compound of Formula (1) as hereinbefore defined wherein M is copper which comprises reacting a compound of Formula (9) with a mixture of hydrogen peroxide and copper sulphate to effect oxygen insertion and copper complexation simultaneously, wherein A and E are as hereinbefore defined.

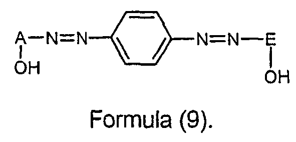

A further aspect of the present invention provides a paper, an overhead projector slide or a textile material printed with an ink, a compound or by means of a process according to the present invention.

A still further as aspect of the present invention provides an ink jet printer cartridge, optionally refillable, comprising one or more chambers and, wherein the ink is present in at least one of the chambers and the ink is as defined in the first aspect of the present invention.

The present compounds and inks provide prints of attractive, neutral black shades that are particularly well suited for the ink jet printing of text and images. The inks have good storage stability and low tendency to block the very fine nozzles used in ink jet printers. Furthermore, the resultant images have good light-fastness, wet-fastness and resistance to fading in the presence of oxidising air pollutants (e.g. ozone).

Unless the context clearly indicates otherwise, as used herein plural forms of the terms herein are to be construed as including the singular form and vice versa.

Throughout the description and claims of this specification, the words "comprise" and "contain" and variations of the words, for example "comprising" and "comprises", mean "including but not limited to", and are not intended to (and do not) exclude other components.

When the term "group" is used to describe a chemical compound or substituent, the described chemical material includes the basic group and that group with conventional substitution. For example, "alkyl group" includes not only such alkyl moieties as methyl, ethyl, propyl, butyl, etc., but also such moieties bearing substituent groups such as halogen, cyano, hydroxyl, nitro, amine, carboxylate, etc.

It will be appreciated that variations to the foregoing embodiments of the invention can be made while still falling within the scope of the invention. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

It will be appreciated that many of the features described above, particularly of the preferred embodiments, are inventive in their own right and not just as part of an embodiment of the present invention. Independent protection may be sought for these features in addition to or alternative to any invention presently claimed.

The invention is further illustrated by the following Examples, which it should be understood are non-limiting on the scope of the invention.

### Example 1

Preparation of:

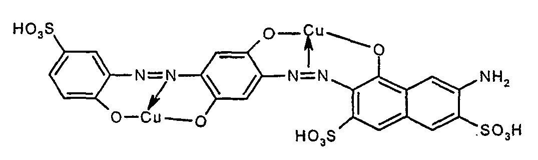

### Stage 1

Preparation of: 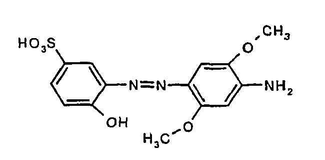 2-Amino-4-sulpho-1-hydroxybenzene (41.40g; 0.20mol) was dissolved in water (300ml) at pH 7 and sodium nitrite (15.18g; 0.22mol) was added with stirring. The solution was added to ice/water containing concentrated hydrochloric acid (60ml). After stirring for 1 hour at 0-10°C the excess nitrous acid was destroyed by the addition of sulphamic acid to give a diazonium solution. 2,5-Dimethoxyaniline (30.6g; 0.20mol) was dissolved in acetone (500ml) and added to the diazonium solution at 0-10°C. After stirring overnight at room temperature the precipitate was filtered off and washed with water to give, after drying (60°C oven), a purple solid (58.91g; 83.4% ).

### Stage 2

Preparation of: 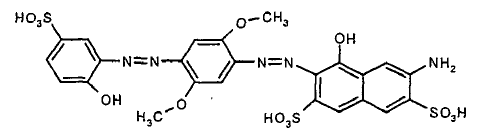 The product from Stage 1 (26.66g; 0.075mol) was dissolved in water (400ml) with stirring at pH 7.5 to which sodium nitrite (15.18g; 0.20mol) was added. The resulting solution was then added to ice/water containing concentrated hydrochloric acid (30ml) with stirring at 0-10°C followed by addition of N-methyl-2-pyrrolidinone (100ml). After stirring for 2 hours, the excess nitrous acid was destroyed by the addition of sulphamic acid.
The resulting diazonium salt was then added to a stirred solution of 7-amino-1-hydroxy-3,6-disulphonapthalene (27.83g; 0.75mol) in water (200ml) at 0-10°C whilst maintaining pH 9-10.5 by the addition of 2N lithium hydroxide when necessary. After stirring overnight the precipitate was filtered off and the resultant damp paste dissolved in water (1.5l), re-precipitated by addition of 15% w/v lithium chloride, filtered and washed with 25% w/v lithium chloride solution. The resulting damp paste was dried (70°C oven) to give a grey powder (70.51 g ; 68% based on 50% strength).

### Stage 3

Preparation of the title compound:
The product from Stage 2 (41.62g; 0.03mol) was dissolved with stirring in a mixture of water (200ml) and diethanolamine (20ml), then warmed to 80°C. Copper sulphate (9.35g; 0.0774mol) dissolved in water (100ml) was then added and the solution stirred at 95°C for 18 hours whilst maintaining pH 8.5-9 throughout by the addition of 0.88 ammonium hydroxide solution when necessary. The resultant solution was screened and the dye was re-precipitated by addition of 20% w/v lithium chloride, filtered off and washed with 40% w/v lithium chloride solution. The resultant solid was then re-dissolved in water and dialysed to low conductivity to give after evaporation (65°C oven) a black solid (22.62g:95% )(εₘₐₓ=25556, λₘₐₓ= 701nm; mass spectrum [M-H]-ve 776).

### Examples 2 to 13

The method of Example 1 was repeated to give the compounds shown in Table 1, Column C, where (unless indicated "N/A") the amine shown in column A was used in Stage 1 in place of 2-amino-4-sulpho-1-hydroxybenzene, and the compound shown in column B was used in Stage 2 in place of 7-amino-1-hydroxy-3,6-disulphonapthalene.

**Table 1**

| **Example** | A | B | **C** **(Final Dye Structure)** | **ε max** | **λ max nm** |
|---|---|---|---|---|---|
| 2 | N/A | 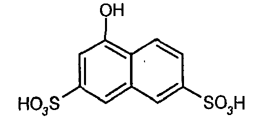 | 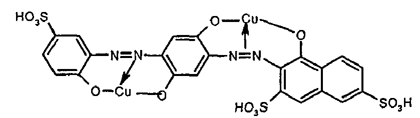 | 27757 19410 | 547 682 |
| 3 | N/A | 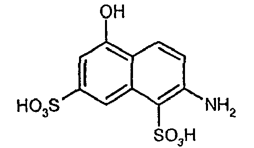 | 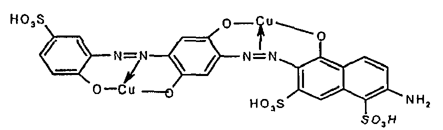 | 19556 17865 | 541 679 |
| 4 | N/A | 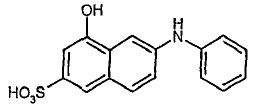 | 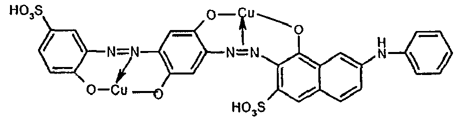 | 18277 15701 | 516 640 |
| 5 | N/A | 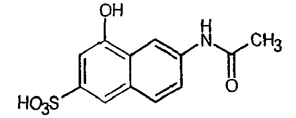 | 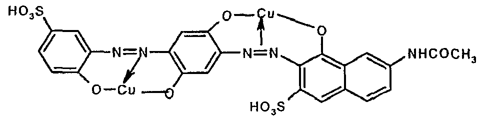 | 24657 v23254 | 548 679 |
| 6 | N/A | 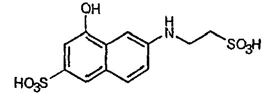 | 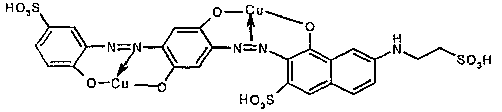 | | 499 691 |
| 7 | N/A | 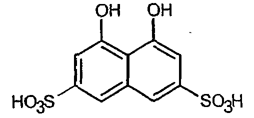 | 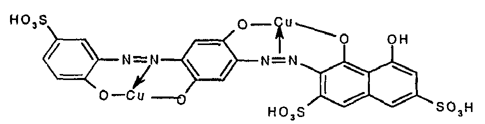 | 25100 | 551 731 |
| 8 | 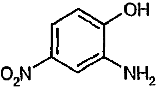 | 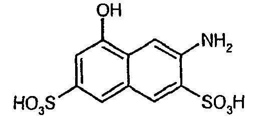 | 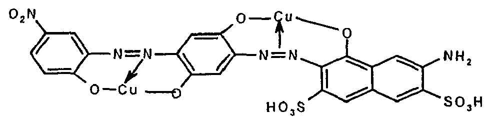 | 21385 | 563 |
| 9 | 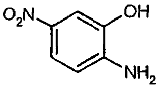 | 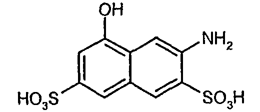 | 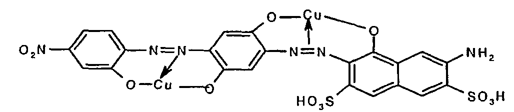 | 20817 20717 | 494 584 |
| 10 | N/A | 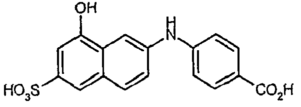 | 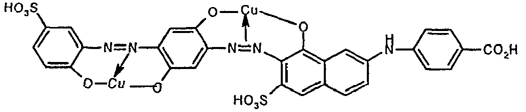 | 22805 | 508 690 |
| 11 | N/A | 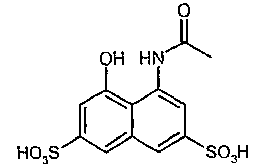 | 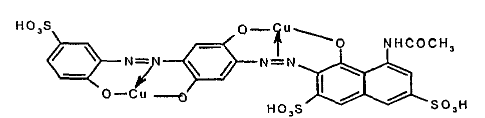 | 31551 | 715 557 |
| 12 | N/A | 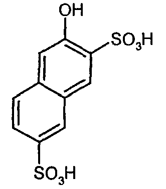 | 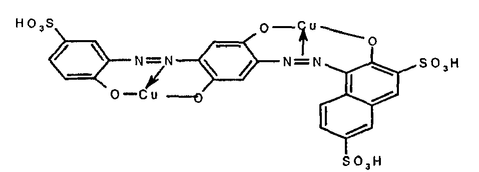 | 25390 23647 | 539 679 |
| 13 | 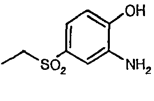 | 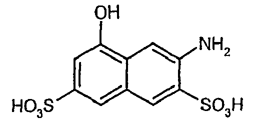 | 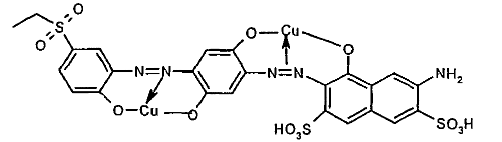 | 20777 21861 | 488 651 |

### Example 14 : Ink Formulations

Inks may be prepared according to the following formulation wherein Dye is the compound or mixture from each of the above Examples above:

| | |
|---|---|
| 2-Pyrrolidone | 5 parts |
| Thiodiglycol | 5 parts |
| Surfynol^{™} 465 | 1 part (from Air Products Inc., USA) |
| Dye | 3 parts |
| Water | 86 parts |

Further inks described in Tables (2) and (3) may be prepared wherein the Dye described in the first column is the compound or mixture made in the above Example of the same number. Numbers quoted in the second column onwards refer to the number of parts of the relevant ingredient and all parts are by weight. The inks may be applied to paper by thermal or piezo ink jet printing.

The following abbreviations are used in Table (I) and (II):
- PG: = propylene glycol
- DEG: = diethylene glycol
- NMP: = N-methyl pyrollidone
- DMK: = dimethylketone
- IPA: = isopropanol
- MEOH: = methanol
- 2P: = 2-pyrollidone
- MIBK: = methylisobutyl ketone
- P12: = propane-1,2-diol
- BDL: = butane-2,3-diol
- CET: = Tris(2-aminoethyl)amine buffer
- PHO: = Na₂HPO₄ and
- TBT: = tertiary butanol
- TDG: = thiodiglycol

**Table 2**

| Dye Ex. No. | Dye Content | Water | PG | DEG | NMP | DMK | NaOH | Na Stearate | IPA | MEOH | 2P | MIBK |
|---|---|---|---|---|---|---|---|---|---|---|---|---|
| 1 | 2.0 | 80 | 5 | | 6 | 4 | | | | | 5 | |
| 2 | 3.0 | 90 | | 5 | 5 | | 0.2 | | | | | |
| 3 | 10.0 | 85 | 3 | | 3 | 3 | | | | 5 | 1 | |
| 4 | 2.1 | 91 | | 8 | | | | | | | | 1 |
| 5 | 3.1 | 86 | 5 | | | | | 0.2 | 4 | | | 5 |
| 6 | 1.1 | 81 | | | 9 | | 0.5 | 0.5 | | | 9 | |
| 7 | 2.5 | 60 | 4 | 15 | 3 | 3 | | | 6 | 10 | 5 | 4 |
| 8 | 5 | 65 | | 20 | | | | | 10 | | | |
| 9 | 2.4 | 75 | 5 | 4 | | 5 | | | | 6 | | 5 |
| 10 | 4.1 | 80 | 3 | 5 | 2 | 10 | | 0.3 | | | | |
| 11 | 3.2 | 65 | | 5 | 4 | 6 | | | 5 | 4 | 6 | 5 |
| 12 | 5.1 | 96 | | | | | | | | 4 | | |
| 13 | 10.8 | 90 | 5 | | | | | | 5 | | | |
| 1 | 10.0 | 80 | 2 | 6 | 2 | 5 | | | 1 | | 4 | |
| 2 | 1.8 | 80 | | 5 | | | | | | | 15 | |
| 3 | 2.6 | 84 | | | 11 | | | | | | 5 | |
| 4 | 3.3 | 80 | 2 | | | 10 | | | | 2 | | 6 |
| 5 | 12.0 | 90 | | | | 7 | 0.3 | | 3 | | | |
| 6 | 5.4 | 69 | 2 | 20 | 2 | 1 | | | | | 3 | 3 |
| 7 | 6.0 | 91 | | | 4 | | | | | | 5 | |

**Table 3**

| Dye Ex. No. | Dye Content | Water | PG | DEG | NMP | CET | TBT | TDG | BDL | PHO | 2P | Pl2 |
|---|---|---|---|---|---|---|---|---|---|---|---|---|
| 8 | 3.0 | 80 | 15 | | | 0.2 | | | | | 5 | |
| 9 | 9.0 | 90 | | 5 | | | | | | 1.2 | | 5 |
| 10 | 1.5 | 85 | 5 | 5 | | 0.15 | 5.0 | 0.2 | | | | |
| 11 | 2.5 | 90 | | 6 | 4 | | | | | 0.12 | | |
| 12 | 3.1 | 82 | 4 | 8 | | 0.3 | | | | | | 6 |
| 13 | 0.9 | 85 | | 10 | | | | | 5 | 0.2 | | |
| 1 | 8.0 | 90 | | 5 | 5 | | | 0.3 | | | | |
| 2 | 4.0 | 70 | | 10 | 4 | | | | 1 | | 4 | 11 |
| 3 | 2.2 | 75 | 4 | 10 | 3 | | | | 2 | | 6 | |
| 4 | 10.0 | 91 | | | 6 | | | | | | 3 | |
| 5 | 9.0 | 76 | | 9 | 7 | | 3.0 | | | 0.95 | 5 | |
| 6 | 5.0 | 78 | 5 | 11 | | | | | | | 6 | |
| 7 | 5.4 | 86 | | | 7 | | | | | | 7 | |
| 8 | 2.1 | 70 | 5 | 5 | 5 | 0.1 | 0.2 | 0.1 | 5 | 0.1 | 5 | |
| 9 | 2.0 | 90 | | 10 | | | | | | | | |
| 10 | 2 | 88 | | | | | | 10 | | | | |
| 11 | 5 | 78 | | | 5 | | | 12 | | | 5 | |
| 12 | 8 | 70 | 2 | | 8 | | | 15 | | | 5 | |
| 13 | 10 | 80 | | | | | | 8 | | | 12 | |
| 1 | 10 | 80 | | 10 | | | | | | | | |

### Examples 15-20: Print Results

Inks were prepared according to the following formulation:
3.5% Dye
9% Thiodiglycol
9% 2-Pyrrolidone
1 % Cyclohexanol
1% Surfynol 465
Remainder = deionised water

The ink pH was 8 -9.

The inks were ink-jet printed onto a variety of papers (including glossy and plain papers) using a Canon i965 ink-jet printer. The properties of the resultant prints were subjected to measurements as described below.

### Relative Optical Density (ROD) measurements.

The prints were left to dry for 24 hours before any measurements were taken.
The optical density readings and CIE colour co-ordinates L, a, b of each print were measured using a Gretag Macbeth Spectrolino with no filter under the following conditions:

| | |
|---|---|
| Illuminant | D65 |
| Observer Angle | 2° |
| Density | Standard Ansi A |

The optical density results are shown below in Table 4. The number in the Dye column denotes the dye made in the above example of the same number. It can be seen that the prints exhibit good optical density.

**Table 4**

| Ex. No. | Dye | Substrate | ROD |
|---|---|---|---|
| 15 | 1 | HP Premium Plus Photo Paper | 1.58 |
| 15 | 1 | Epson Premium Glossy Photo Paper | 1.50 |
| 15 | 1 | Xerox Acid Paper | 0.95 |
| 16 | 5 | HP Premium Plus Photo Paper | 1.30 |
| 16 | 5 | Epson Premium Glossy Photo Paper | 1.22 |
| 16 | 5 | Xerox Acid Paper | 0.90 |
| 17 | 6 | HP Premium Plus Photo Paper | 1.17 |
| 17 | 6 | Epson Premium Glossy Photo Paper | 1.24 |
| 17 | 6 | Xerox Acid Paper | 0.87 |
| 18 | 10 | HP Premium Plus Photo Paper | 1.32 |
| 18 | 10 | Epson Premium Glossy Photo Paper | 1.32 |
| 18 | 10 | Xerox Acid Paper | 0.87 |

### Light Fastness

The light fastness of the prints was assessed using an Atlas Ci5000 Weather-o-meter running an Atlas 12000W Xenon Lamp at 0.8 W/m² at 420nm. The black panel temperature was controlled to 63°C at 50% relative humidity and borosilicate and soda lime filters were employed. The prints were exposed for 100 hours and then re-measured using the Gretag Macbeth set to the conditions described above. Light fastness results are displayed in Table 5. The degree of fade is expressed as ΔE where a lower figure indicates higher light fastness, and ΔE is defined as the overall change in the CIE colour co-ordinates L, a, b of the print and is expressed by the equation ΔE = (ΔL² + Δ a² + Δb²)^{0.5}.

For comparison, reference inks were also made up, printed and analysed in the same way using a commercially available metallised black dye (herein "Commercial Dye 1 ") and a commercially available non-metallised black dye (herein "Commercial Dye 2"), the structures of which are shown below:

### Commercial Dye 1:

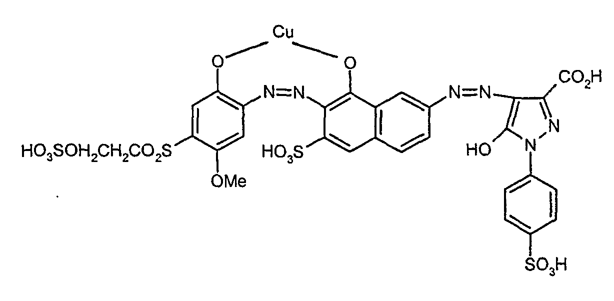

Commercial Dye 2 is a mixture of the following compounds:

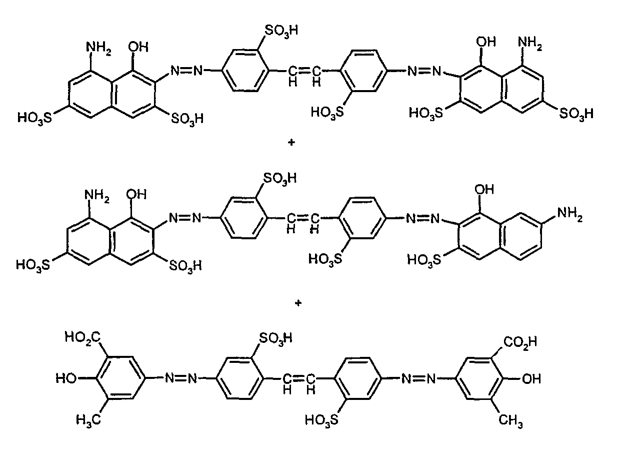

It can be seen that the prints made using the inks of the present invention exhibited significantly improved light fastness (lower ΔE values) over the prints made using the inks containing the reference commercial compounds.

**Table 5 - Light Fastness:**

| Ex. No. | Dye | Substrate | ΔE |
|---|---|---|---|
| 15 | 1 | HP Premium Plus Photo Paper | 5.0 |
| 15 | 1 | Epson Premium Glossy Photo Paper | 11.9 |
| 15 | 1 | Xerox Acid Paper | 7.6 |
| 16 | 5 | HP Premium Plus Photo Paper | 2.9 |
| 16 | 5 | Epson Premium Glossy Photo Paper | 10.2 |
| 16 | 5 | Xerox Acid Paper | 4.1 |
| 17 | 6 | HP Premium Plus Photo Paper | 5.1 |
| 17 | 6 | Epson Premium Glossy Photo Paper | 11.9 |
| 17 | 6 | Xerox Acid Paper | 6.5 |
| 18 | 10 | HP Premium Plus Photo Paper | 5.8 |
| 18 | 10 | Epson Premium Glossy Photo Paper | 9.9 |
| 18 | 10 | Xerox Acid Paper | 4.3 |
| 19 | Commercial Dye 1 | HP Premium Plus Photo Paper | 6.6 |
| 19 | Commercial Dye 1 | Epson Premium Glossy Photo Paper | 15.3 |
| 19 | Commercial Dye 1 | Xerox Acid Paper | 9.7 |
| 20 | Commercial Dye 2 | HP Premium Plus Photo Paper | 55.0 |
| 20 | Commercial Dye 2 | Epson Premium Glossy Photo Paper | 62.1 |
| 20 | Commercial Dye 2 | Xerox Acid Paper | 45.1 |

### Ozone Fastness

The ozone fastness of the prints was assessed following exposure to an ozone concentration of 1 ppm for 24 hours using a Hampden Model 903 Ozone Test Cabinet at a temperature of 40°C and relative humidity of 50%. The ozone fastness results are displayed in Table 6. Prints made using the reference inks with Commercial Dyes 1 and 2 were again tested for comparison.

It can be seen that the prints made using the inks of the present invention exhibited significantly improved ozone fastness (lower ΔE values) over the prints made using the inks containing the reference commercial compounds.

**Table 6 - Ozone Fastness**

| Ex. No. | Dye | Substrate | ΔE |
|---|---|---|---|
| 15 | 1 | Epson Premium Glossy Photo Paper | 21.7 |
| 16 | 5 | Epson Premium Glossy Photo Paper | 7.5 |
| 17 | 6 | Epson Premium Glossy Photo Paper | 8.5 |
| 18 | 10 | Epson Premium Glossy Photo Paper | 5.0 |
| 19 | Commercial Dye 1 | Epson Premium Glossy Photo Paper | 45.3 |
| 20 | Commercial Dye 2 | Epson Premium Glossy Photo Paper | 51.6 |

## Claims

1. An ink comprising a liquid medium and a compound of Formula (1): 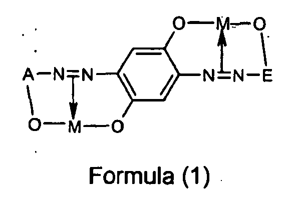 wherein:
A and E are each independently optionally substituted phenylene or naphthylene groups;
each M independently is a metal selected from Fe, Co, Cr, Cu, Ni, Zn, Al or Ti; and wherein the liquid medium comprises water and an organic solvent.

2. An ink according to claim 1 wherein the compound of Formula (1) has at least two water solubilising groups.

3. An ink according to claim 2 wherein at least two of the water solubilising groups are selected from the group consisting of carboxy, sulpho and phosphato.

4. An ink according to claim 3 wherein at least two of the water solublising groups are sulpho.

5. An ink according to any of claims 1 to 4 which comprises at least one further colorant.

6. A compound of Formula (1): 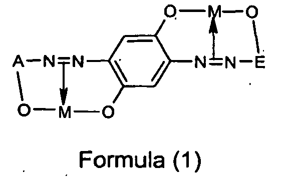 wherein:
A and E are each independently optionally substituted phenylene or naphthylene groups; and
each M independently is a metal selected from Fe, Co, Cr, Cu, Ni, Zn, Al or Ti ;
and wherein the compound has at least two water solubilising groups selected from the group consisting of carboxy, sulpho and phosphato;
with the proviso that the optional substituents on A and E are not quaternary ammonium groups and are not of Formula (2): 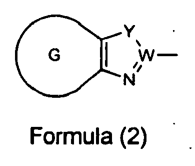 wherein G is an aryl or heteroaryl aromatic ring; and W and Y are each independently selected from carbon, sulphur, oxygen or nitrogen.

7. A compound according to claim 6 wherein at least two of the water solubilising groups are sulpho.

8. A compound according to any one of claims 6 to 7 wherein M is copper, nickel, cobalt, chromium, zinc or iron.

9. A compound according to claim 8 wherein each M is copper.

10. A compound according to any one of claims 6 to 9 wherein one of A and E is optionally substituted phenylene and the other is optionally substituted naphthylene.

11. A compound according to any one of claims 6 to 10 wherein A is optionally substituted phenylene and the optional substituents on A are independently selected from sulpho, nitro and a sulphonyl.

12. A compound according to any one of claims 6 to 11 wherein E is optionally substituted naphthylene and the optional substituents on E are independently selected from hydroxy, optionally substituted amine or acylamine, sulpho, nitro, carboxy and phosphato.

13. A compound according to any one of claims 6 to 12 which is of Formula (3) or a salt thereof wherein X is sulpho or nitro and M is copper:

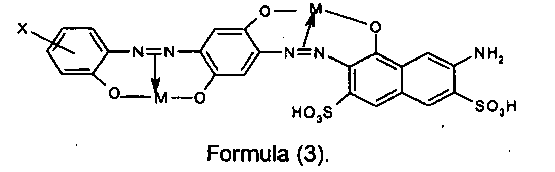

14. A compound according to claim 13 which is of Formula (4) or a salt thereof:

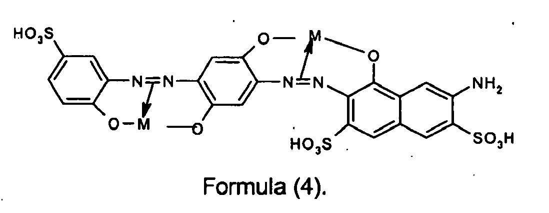

15. A compound according to claim 13 which is of Formula (5) or a salt thereof:

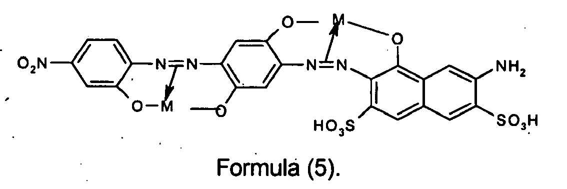

16. A process for the preparation of a compound of Formula (1) according to any one of claims 6 to 15 which process comprises reacting a compound of Formula (6), wherein each R is independently H or methyl and A and E are as defined in Formula (1), with a salt of a metal M, wherein M is as defined in Formula (1), to effect complexation, and simultaneous demethylation in the case where R is methyl:

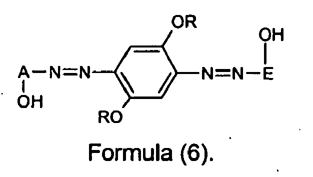

17. A process according to claim 16 further comprising making the compound of Formula (6) by diazotising an amine of Formula (7) and coupling the resultant diazonium salt with a compound of formula H-E-OH:

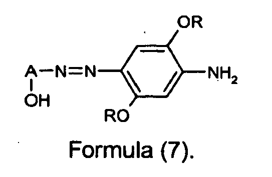

18. A process according to claim 17 further comprising making the compound of Formula (7) by diazotising a compound of formula HO-A-NH₂ and coupling the resultant diazonium salt onto a compound of Formula (8):

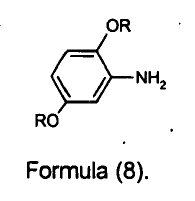

19. A process for the preparation of a compound of Formula (1) according to any one of claims 6 to 15 which process comprises reacting a compound of Formula (9) with a mixture of hydrogen peroxide and copper sulphate to effect oxygen insertion and copper complexation simultaneously, wherein A and E are as defined in Formula (1):

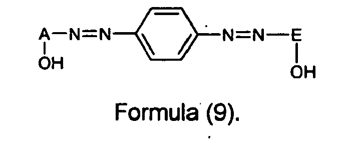

20. A process for printing an image on a substrate comprising applying thereto an ink according to any of claims 1 to 5.

21. A process according to claim 20 wherein the image is text, a picture, a photorealistic image or a combination thereof.

22. A process according to claim 20 or 21 wherein the substrate is paper, plastic; a textile, metal or glass.

## Patentansprüche

1. Tinte, umfassend ein flüssiges Medium und eine Verbindung der Formel (1): 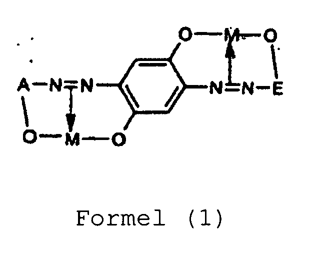 wobei
A und E jeweils unabhängig voneinander gegebenenfalls substituierte Phenylen- oder Naphthylengruppen und
M jeweils unabhängig voneinander ein unter Fe, Co, Cr, Cu, Ni, Zn, Al oder Ti ausgewähltes Metall bedeuten, und wobei das flüssige Medium Wasser und ein organisches Lösungsmittel umfaßt.

2. Tinte nach Anspruch 1, bei der die Verbindung der Formel (1) mindestens zwei wasserlöslichmachende Gruppen aufweist.

3. Tinte nach Anspruch 2, bei der mindestens zwei der wasserlöslichmachenden Gruppen ausgewählt sind aus der Gruppe, bestehend aus Carboxy, Sulfo und Phosphato.

4. Tinte nach Anspruch 3, bei der es sich bei mindestens zwei der wasserlöslichmachenden Gruppen um Sulfo handelt.

5. Tinte nach einem der Ansprüche 1 bis 4, die mindestens ein weiteres Farbmittel umfaßt.

6. Verbindung der Formel (1): 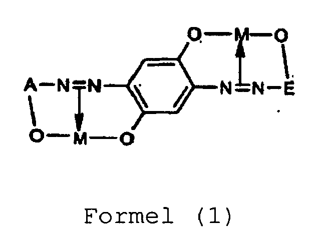 wobei
A und E jeweils unabhängig voneinander gegebenenfalls substituierte Phenylen- oder Naphthylengruppen und
M jeweils unabhängig voneinander ein unter Fe, Co, Cr, Cu, Ni, Zn, Al oder Ti ausgewähltes Metall bedeuten, wobei die Verbindung mindestens zwei wasserlöslichmachende Gruppen, ausgewählt aus der Gruppe, bestehend aus Carboxy, Sulfo und Phosphato, aufweist,
mit der Maßgabe, daß es sich bei den gegebenenfalls an A und E stehenden Substituenten nicht um quaternäre Ammoniumgruppen handelt und sie nicht der Formel (2): 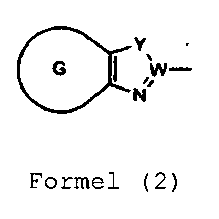 entsprechen, in der G einen aryl- oder heteroarylaromatischen Ring bedeutet und W und Y jeweils unabhängig voneinander unter Kohlenstoff, Schwefel, Sauerstoff oder Stickstoff ausgewählt sind.

7. Verbindung nach Anspruch 6, bei der es sich bei mindestens zwei der wasserlöslichmachenden Gruppen um Sulfo handelt.

8. Verbindung nach einem der Ansprüche 6 bis 7, bei der M für Kupfer, Nickel, Cobalt, Chrom, Zink oder Eisen steht.

9. Verbindung nach Anspruch 8, bei der M jeweils für Kupfer steht.

10. Verbindung nach einem der Ansprüche 6 bis 9, bei der einer der Reste A und E gegebenenfalls substituiertes Phenylen und der andere gegebenenfalls substituiertes Naphthylen bedeutet.

11. Verbindung nach einem der Ansprüche 6 bis 10, bei der A gegebenenfalls substituiertes Phenylen bedeutet, wobei die gegebenenfalls an A stehenden Substituenten unabhängig voneinander unter Sulfo, Nitro und Sulfonyl ausgewählt sind.

12. Verbindung nach einem der Ansprüche 6 bis 11, bei der E gegebenenfalls substituiertes Naphthylen bedeutet, wobei die gegebenenfalls an E stehenden Substituenten unabhängig voneinander unter Hydroxy, gegebenenfalls substituiertem Amino oder Acylamin, Sulfo, Nitro, Carboxy und Phosphato ausgewählt sind.

13. Verbindung nach einem der Ansprüche 6 bis 12, entsprechend der Formel (3), oder Salz davon 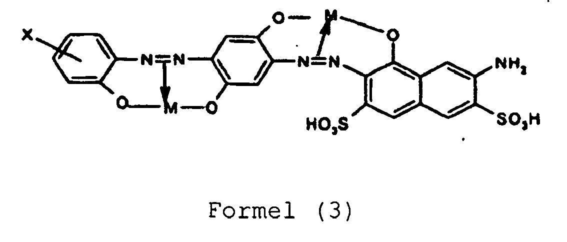 wobei X Sulfo oder Nitro und M Kupfer bedeutet.

14. Verbindung nach Anspruch 13, entsprechend der Formel (4), oder Salz davon

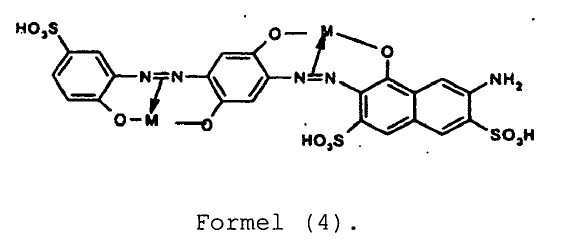

15. Verbindung nach Anspruch 13, entsprechend der Formel (5), oder Salz davon:

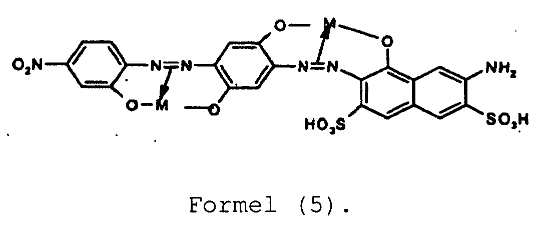

16. Verfahren zur Herstellung einer Verbindung der Formel (1) gemäß einem der Ansprüche 6 bis 15, bei dem man eine Verbindung der Formel (6) 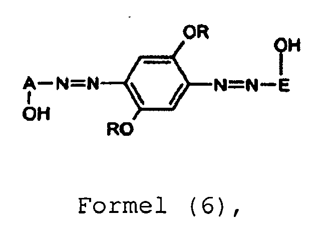 in der R jeweils unabhängig voneinander H oder Methyl bedeutet und A und E die in Formel (1) genannte Bedeutung haben, mit einem Salz eines Metalls M, wobei M die in Formel (1) genannte Bedeutung hat, unter Komplexbildung und im Falle von R gleich Methyl gleichzeitiger Demethylierung umsetzt.

17. Verfahren nach Anspruch 16, bei dem man ferner zur Herstellung der Verbindung der Formel (6) ein Amin der Formel (7) 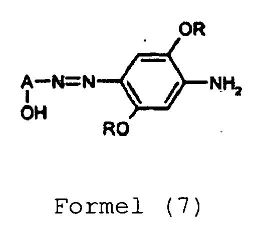 diazotiert und auf eine Verbindung der Formel H-E-OH kuppelt.

18. Verfahren nach Anspruch 17, bei dem man ferner zur Herstellung der Verbindung der Formel (7) eine Verbindung der Formel HO-A-NH₂ diazotiert und auf eine Verbindung der Formel (8): 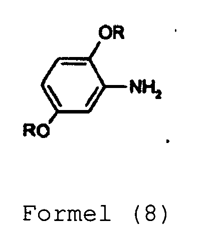 kuppelt.

19. Verfahren zur Herstellung einer Verbindung der Formel (1) gemäß einem der Ansprüche 6 bis 15, bei dem man eine Verbindung der Formel (9) 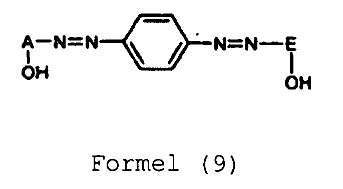 mit einer Mischung von Wasserstoffperoxid und Kupfersulfat unter gleichzeitiger Sauerstoffinsertion und Kupferkomplexbildung umsetzt, wobei A und E die in Formel (1) genannte Bedeutung haben.

20. Verfahren zum Bedrucken eines Substrats mit einer Tinte gemäß einem der Ansprüche 1 bis 5.

21. Verfahren nach Anspruch 20, bei dem man das Substrat mit Schrift, einem Bild, einer photorealistischen Darstellung oder einer Kombination davon bedruckt.

22. Verfahren nach Anspruch 20 oder 21, bei dem man als Substrat Papier, Kunststoff, Textil, Metall oder Glas bedruckt.

## Revendications

1. Encre comprenant un milieu liquide et un composé de formule (1) : 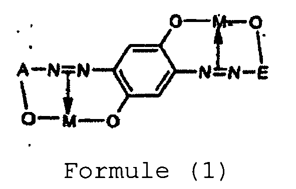 dans laquelle :
A et E sont, chacun indépendamment, des groupes phénylène ou naphtylène éventuellement substitués ;
chaque M est indépendamment un métal choisi parmi le Fe, le Co, le Cr, le Cu, le Ni, le Zn, l'Al, ou le Ti ; et où le milieu liquide comprend de l'eau et un solvant organique.

2. Encre selon la revendication 1, dans laquelle le composé de formule (1) renferme au moins deux groupes hydro-solubilisants.

3. Encre selon la revendication 2, dans laquelle au moins deux des groupes hydro-solubilisants sont choisis parmi le groupe constitué d'un groupe carboxy, d'un groupe sulfo et d'un groupe phosphato.

4. Encre selon la revendication 3, dans laquelle au moins deux des groupes hydro-solubilisants sont un groupe sulfo.

5. Encre selon l'une quelconque des revendications 1 à 4, qui comprend au moins un colorant supplémentaire.

6. Composé de formule (1) : 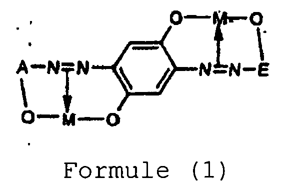 dans laquelle :
A et E sont, chacun indépendamment, des groupes phénylène ou naphtylène éventuellement substitués ; et
chaque M est indépendamment un métal choisi parmi le Fe, le Co, le Cr, le Cu, le Ni, le Zn, l'Al, ou le Ti ;
et où le composé renferme au moins deux groupes hydro-solubilisants choisis parmi le groupe constitué d'un groupe carboxy, d'un groupe sulfo et d'un groupe phosphato ;
à condition que les substituants éventuels sur A et E ne soient pas des groupes ammonium quaternaires et ne soient pas de formule (2) : 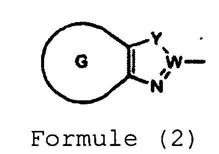 dans laquelle G est un noyau aromatique aryle ou hétéroaryle ; et W et Y sont, chacun indépendamment, choisis parmi un atome de carbone, un atome de soufre, un atome d'oxygène ou un atome d'azote.

7. Composé selon la revendication 6, dans lequel au moins deux des groupes hydro-solubilisants sont un groupe sulfo.

8. Composé selon l'une quelconque des revendications 6 et 7, dans lequel M est le cuivre, le nickel, le cobalt, le chrome, le zinc ou le fer.

9. Composé selon la revendication 8, dans lequel chaque M est le cuivre.

10. Composé selon l'une quelconque des revendications 6 à 9, dans lequel l'un parmi A et E est un groupe phénylène éventuellement substitué et l'autre est un groupe naphtylène éventuellement substitué.

11. Composé selon l'une quelconque des revendications 6 à 10, dans lequel A est un groupe phénylène éventuellement substitué et les substituants éventuels sur A sont choisis indépendamment parmi un groupe sulfo, un groupe nitro et un groupe sulfonyle.

12. Composé selon l'une quelconque des revendications 6 à 11, dans lequel E est un groupe naphtylène éventuellement substitué et les substituants éventuels sur E sont choisis indépendamment parmi un groupe hydroxy, un groupe acylamine ou amine éventuellement substitué, un groupe sulfo, un groupe nitro, un groupe carboxy et un groupe phosphato.

13. Composé selon l'une quelconque des revendications 6 à 12, qui est de formule (3) ou un sel de celui-ci, dans laquelle X est un groupe sulfo ou un groupe nitro et M est le cuivre :

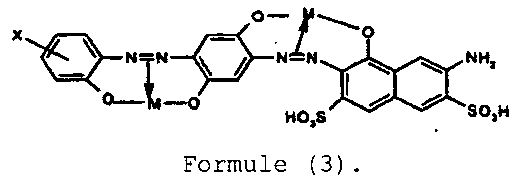

14. Composé selon la revendication 13, qui est de formule (4) ou un sel de celui-ci :

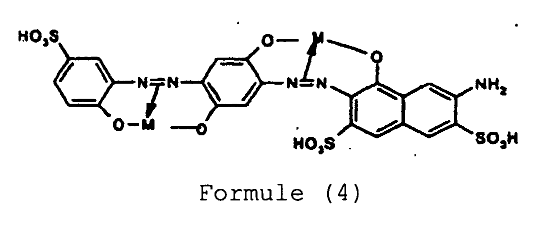

15. Composé selon la revendication 13, qui est de formule (5) ou un sel de celui-ci :

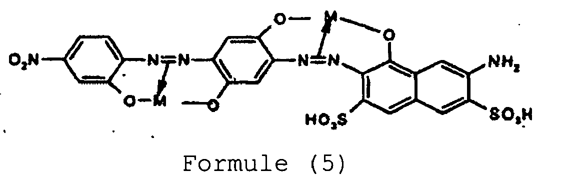

16. Procédé de préparation d'un composé de formule (1) selon l'une quelconque des revendications 6 à 15, ledit procédé comprenant la réaction d'un composé de formule (6), dans lequel chaque R est indépendamment un atome d'hydrogène ou un groupe méthyle, et A et E sont tels que définis dans la formule (1), avec un sel d'un métal M, où M est tel que défini dans la formule (1), pour effectuer la complexation, et la déméthylation simultanée dans le cas où R est un groupe méthyle :

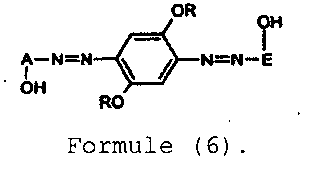

17. Procédé selon la revendication 16, comprenant en outre la production du composé de formule (6) par la diazotation d'une amine de formule (7) et le couplage du sel de diazonium résultant avec un composé de formule HE-OH :

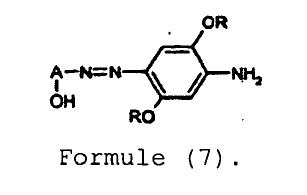

18. Procédé selon la revendication 17, comprenant en outre la production du composé de formule (7) par la diazotation d'un composé de formule Ho-A-NH₂ et le couplage du sel de diazonium résultant sur un composé de formule (8) :

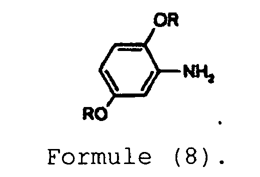

19. Procédé de préparation d'un composé de formule (1) selon l'une quelconque des revendications 6 à 15, ledit procédé comprenant la réaction d'un composé de formule (9) avec un mélange de peroxyde d'hydrogène et de sulfate de cuivre pour effectuer l'insertion d'oxygène et la complexation de cuivre simultanément, dans laquelle A et E sont tels que définis dans la formule (1) :

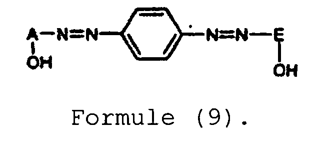

20. Procédé d'impression d'une image sur un substrat comprenant l'application, sur celui-ci, d'une encre selon l'une quelconque des revendications 1 à 5.

21. Procédé selon la revendication 20, dans lequel l'image est un texte, une photographie, une image photoréaliste ou une combinaison de ceux-ci.

22. Procédé selon la revendication 20 ou 21, dans lequel le substrat est du papier, du plastique, un textile, du métal ou du verre.
